(19) Europäisches Patentamt

European Patent Office

Office européen des brevets

(11) **EP 2 983 131 A1**

(12) **EUROPEAN PATENT APPLICATION**

(43) Date of publication:
**10.02.2016 Bulletin 2016/06**

(51) Int Cl.:
*G06T 7/00* (2006.01)

(21) Application number: **14306245.3**

(22) Date of filing: **06.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing
92130 Issy-les-Moulineaux (FR)**

(72) Inventors:
• **Sorgi, Lorenzo
30655 Hannover (DE)**
• **Grard, Matthieu
71670 Le Breuil (FR)**

(74) Representative: **Schmidt-Uhlig, Thomas
Deutsche Thomson OHG
European Patent Operations
Karl-Wiechert-Allee 74
30625 Hannover (DE)**

(54) **Method and device for camera calibration**

(57)    A method and an apparatus for camera calibration are described. The method and the apparatus use an image dataset in which a calibration object is captured by a camera. 2D and 3D correspondences are acquired from the image dataset, as well as reprojection errors of the 2D and 3D correspondences. A reliability map of a retinal plane of the camera is generated using the acquired reprojection errors, which indicates a reliability measure of the geometrical information carried by each pixel of the retinal plane of the calibrated camera.

**Fig. 1**

**Description**

**FIELD OF THE INVENTION**

The present invention relates to a method and a device for camera calibration, which is a field that collects algorithms and technologies aimed at the characterization of a mathematical projection model for the image formation process of a camera. In particular, the present invention reviews a camera calibration using a pixel-wise reliability map of the camera retinal plane.

**BACKGROUND OF THE INVENTION**

A camera calibration process in general consists of radiometrical and geometrical stages. The radiometrical calibration is to acquire information on how a camera distorts the luminous properties of a scene, e.g. color and luminance. It plays a fundamental and important role for applications such as astronomical imaging and color processing, but is generally bypassed in most of typical 3D vision applications. The geometrical calibration leads to the estimation of a suitable model for the image formation geometry, namely the camera projection and the optical distortion, and is crucial for most 3D vision applications.

Calibration techniques can be generally classified into self-calibration and object-based calibration methods. Self-calibration attempts to infer the camera model from the transformation of the image appearance under the action of a rigid motion, while object-based calibration relies on a certain a-priori known calibration object [I, II].

The most common object-based techniques assume the availability of an image dataset of a specific object, which has a known shape and can be easily detected. The calibration object is captured by a camera from different points of view, providing the required image dataset. This prerequisite eases the collection of a set of correspondences between 3D points and 2D image projections for a subsequent camera calibration procedure [III].

The pioneer technique in this field was proposed by Tsai [IV] and has been followed by a large number of other algorithms, which differentiate from each other in attributes such as the geometry of the calibration object, the visual features represented on the object surface, the number of required images, the constraints on camera motion and the estimated camera projection model [V]. Among the huge proliferation of calibration algorithms, Zhang's approach [VI] deserves a remark as it has become the basis of many open-source as well as commercial calibration tools. Meanwhile, with a large number of standard solutions, several tools addressing specific problems like fisheye lenses and omnidirectional imaging systems and camera clusters calibration are also available.

Despite the large number of solutions, the accuracy of calibration results remains an open issue to which not much attention has been given. Since camera calibration utilizes a parameter estimation framework, the same is thus subjected to a theoretical bound and a limited accuracy. The projection model and the lens distortion model estimated from camera calibration describe merely an approximate model for the actual image formation process. In particular, it is widely recognized that the accuracy of the estimated model is spatially variant across the retinal plane of the calibrated camera, which is especially not reliable in the farthest region of the retinal plane. For example, in the case of a wide-angle camera, it is difficult to collect the image correspondences for calibration in peripheral areas, where the calculated geometrical model is thus of a compromised and uncertain reliability.

**SUMMARY OF THE INVENTION**

It is an objective of the present invention to propose a method and a device for an improved camera calibration, more specifically, for reviewing camera calibration by using a reliability map of the retinal plane of the calibrated camera.

According to the invention, a method of camera calibration for a camera is introduced. The method uses an image dataset in which a calibration object is captured by a camera, and comprises: acquiring 2D and 3D correspondences from the image dataset; acquiring reprojection errors of the 2D and 3D correspondences; and generating a reliability map of a retinal plane of the camera using the acquired reprojection errors.

The reliability map is preferably a pixel-wise reliability map indicating a reliability measure of the geometrical information carried by each pixel of the retinal plane of the calibrated camera. The reliability measure is optionally defined as a distribution function extracted from the probability density function of the reprojection error, where the probability density function is defined as a spatially varied Gaussian Mixture Model.

In one embodiment, generating the reliability map includes statistically analysing the reprojection errors, and preferably, further includes defining a threshold for the reliability measure and generating the reliability map with regard to the threshold.

Accordingly, a camera calibration apparatus is introduced, which uses an image dataset in which a calibration object is captured by a camera. The apparatus comprises an acquiring unit and an operation unit. The acquiring unit is configured to acquire 2D and 3D correspondences from the image dataset and to acquire reprojection errors of the 2D and 3D correspondences. The operation unit is configured to generate a reliability map of a retinal plane of the camera using the acquired reprojection errors. Preferably, the operation unit is further configured to statistically analyze the reprojection errors.

Also, a computer readable storage medium has stored therein instructions for camera calibration, which when executed by a computer, cause the computer to: acquire 2D and 3D correspondences from an image dataset in which a calibrated object is captured by a camera; acquire reprojection errors of the 2D and 3D correspondences; and generate a reliability map of a retinal plane of the camera using the acquired reprojection errors.

The method of this invention provides an improved camera calibration procedure by the analysis of reprojection errors and the utilization of a reliability map of the retinal plane of the calibrated camera. The reliability map, which can be directly extracted from the spatial distribution of the reprojection errors by applying a user-defined threshold, indicates the reliability of the geometrical information carried by each pixel of the retinal plane. In other words, the reliability map provides a precise indication of the regions of the retinal plane where the calibration is reliable or not. An analysis of such a map can remove the regions with low reliability measure for further calibration processing, and thus optimize the effective exploitation of the camera projection model.

Since the reliability map is generated based on a statistical analysis of a typical camera calibration dataset, it can be easily integrated in any computer vision system as a supplementary calibration parameter without additional requirements. Therefore, the performance of a computer vision system can be greatly improved with a higher accuracy of the camera calibration result and a better support of subsequent image analysis processing.

**BRIEF DESCRIPTION OF THE DRAWINGS**

For a better understanding the invention shall now be explained in more detail in the following description with reference to the figures. It is understood that the invention is not limited to this disclosed exemplary embodiments and that specified features can also expediently be combined and/or modified without departing from the scope of the present invention as defined in the appended claims. In the figures:

Fig. 1    is a flow chart illustrating one preferred embodiment of the method of camera calibration according to the present invention.

Fig. 2    is a flow chart illustrating a motion tracking scheme used for acquiring reprojection errors according to one exemplary embodiment of the method of this invention.

Fig. 3    shows implementation examples of the reliability map generated according to this invention.

Fig. 4    is a schematic diagram illustrating one embodiment of the camera calibration apparatus according to this invention.

**DETAILED DESCRIPTION OF PREFERRED EMBODIMENTS**

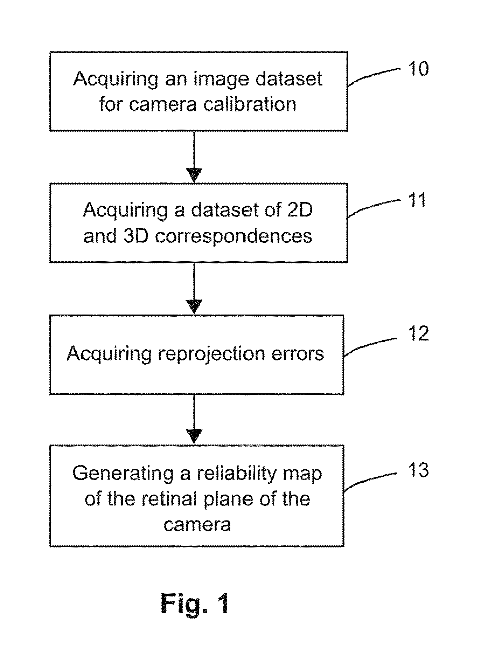

Fig. 1 schematically illustrates a preferred embodiment of the method of camera calibration according to the present invention. The method comprises: acquiring 10 an image dataset for camera calibration; acquiring 11 2D and 3D correspondences from the image dataset; acquiring 12 reprojection errors of the 2D and 3D correspondences; and generating 13 a reliability map of the retinal plane of the calibrated camera using the acquired reprojection errors.

In the acquired image dataset for camera calibration, a calibration object is captured by the camera to be calibrated. The calibration object is preferably with a-priori known geometry and visible in each of the images, in order to ease the collection of reliable 2D/3D correspondences. The images of the image dataset can be captured individually by the camera, or alternatively, extracted from a video sequence captured by the same. An exemplary extraction method is described in European Patent Application EP14306127 by the same inventor.

The acquired image dataset is used for camera calibration including acquiring 11 2D and 3D correspondences and accordingly acquiring 12 reprojection errors of the 2D/3D correspondences. The 2D/3D correspondences and the reprojection errors can be acquired by any available and known method and technique.

In the method according to this invention, the reprojection error is used as a reliability indicator for camera calibration. The reprojection error is defined as the distance between a measured image feature and the analytical projection of the corresponding 3D point on the retinal plane of the calibrated camera. This measure is generally used for camera tracking and 3D reconstruction from multiple views [III, VII, VIII]. It has been recognized that the minimization of the reprojection error provides the optimal maximum likelihood estimation (MLE) of the camera and 3D structure, under the assumption of Gaussian noise of the image measurement. In other words, the camera calibration result is superior with minimum reprojection errors.

A reliability map of the retinal plane of the calibrated camera is generated 13 using the acquired reprojection errors. The reliability map is preferably a pixel-wise reliability map indicating the reliability measure of the geometrical information carried by each pixel on the retinal plane of the camera. In one embodiment, generating the reliability map includes analyzing the dataset of the reprojection errors within a statistical framework.

An exemplary embodiment of the method of this invention is described below in detail. In this embodiment, a checkerboard is used as a calibration object and is captured by a camera to be calibrated from various viewpoints. The checkerboard preferably spans exhaustively on the retinal plane of the camera, which can ease the acquirement of the image dataset and the corresponding 2D/3D correspondences. The image dataset is extracted from a video sequence captured by the camera, and the 2D/3D correspondences are acquired from an analysis of the image dataset. In alternative, any known technique can be utilized for acquiring the image dataset as well as the 2D/3D correspondences.

To acquire a dataset of projection errors from the 2D/3D correspondences, the camera calibration parameters, which model the perspective projection and the lens distortion, are provided by a $3\times3$ matrix $K$ and a non-linear function $f_d(x)$. Each of the reprojection errors is represented as a six-vector collecting the 2D pixel coordinates of an image feature, corresponding 2D metric coordinates, a pixel reprojection error as a pixel distance in the image space, and an angular reprojection error computed in the normalized metric space.

Let $(X,m)$ be a 3D/2D correspondence, where $X \in \mathbb{R}^3$ is a point in 3D space and $m \in \mathbb{R}^2$ is the corresponding 2D image feature in pixel coordinates, by normalizing m with respect to the camera internal parameters, the corresponding 3D incidence vector can be obtained and denoted as $x \in \mathbb{R}^2$:

$$x \sim f_d^{-1}\left(K^{-1}\begin{bmatrix} m \\ 1 \end{bmatrix}\right),$$

where "$\sim$" means equal up to a non-zero scale factor. Denoting $\hat{a}$ as an estimate of a given variable $a$, the incidence vector corresponding to a given 3D point $X$ can be analytically estimated:

$$\hat{x} \sim RX + t, \tag{1}$$

where $(R, t) \in SE(3)$ is the camera pose with respect to a fixed reference frame. Similarly, an estimate of the image feature can be obtained by

$$\widehat{m} \sim K \cdot f_d(\hat{x}). \tag{2}$$

Using the above notation for the perspective projection equations (1) and (2), the pixel reprojection error $\varepsilon_p$ and angular reprojection error $\varepsilon_\theta$ are defined as:

$$\varepsilon_p = \|m - \widehat{m}\|_2$$

$$\varepsilon_\theta = \angle(x, \hat{x}),$$

where $\|.\|$ is the Euclidean norm and $\angle(a,b)$ means the angle subtended by two vectors in $\mathbb{R}^3$. A dataset of reprojection errors $D$ is then comprised of a large collection of error measurements in the form of

$$D = \{\rho_i\}_{i=1,\dots,N}, \text{ where } \rho_i = \left[m_i^T, x_i^T, \varepsilon_{p,i}, \varepsilon_{\theta,i}\right].$$

From (1) it is evident that for the analysis and computation of the calibration data a set camera pose and a known structure of the camera object is required. The exploitation of a calibration checkerboard would be a straightforward solution, which limits the required additional computational bargain and allows for a direct establishment of 2D/3D correspondences.

In this exemplary embodiment, a checkerboard is thus used as a calibration object and is captured in a video sequence from which the image dataset for calibration is extracted. The video sequence is subjected to a motion tracking in order to acquire the 2D/3D correspondences and the reprojection errors.

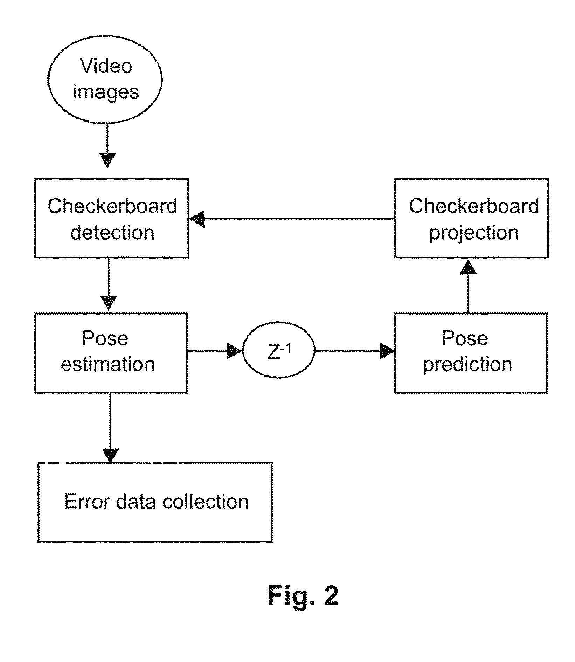

As shown in Fig. 2, the motion tracking scheme is based on a prediction-measurement analysis, which is highly effective under the assumption of smooth and slow temporal variation of the relative motion between the camera and the calibration object. The symbol $Z^{-1}$ in the figure denotes one frame delay. In this scheme, the camera pose from the previous frame is used to predict the current camera pose, assuming a constant velocity motion model. The positions of the corner points of the checkerboard are consequently predicted by analytical projection of the 3D grid points onto the retinal plane, using equations (1) and (2). Among the predicted corner positions, only those falling within the image plane are retained and measured with sub-pixel accuracy in a small search window by a standard corner detector [IX]. Specifically, a corner tracker used in this embodiment is initialized by a user interaction and performed by a recursive grid extraction method described in European Patent Application EP14306127 by the same inventor. In addition, a corner detector implementation available in Camera Calibration Toolbox [X] is integrated in the tracking scheme used here. By setting the size of the search window to 50% of the minimum distances between neighboring corners, the situation where a search window includes more than one corner can be avoided. An actual camera pose is then retrieved from the dataset of 2D/3D correspondences established from the current frame, and the reprojection errors are accordingly computed and collected as defined by the above equations.

The reliability map for the image plane, i.e. the retinal plane of the calibrated camera, is generated 13 using the acquired reprojection errors. In this embodiment, a reliability measure is defined as a function

$$\rho(m) : \Omega \subset \mathbb{R}^2 \to \mathbb{R}^+,$$

where $\Omega$ denotes the image retinal plane. The function $\rho(m)$ provides an additional calibration feature, which can be directly used as a confidence measure for the visual information or alternatively allows for the extraction of a reliable area from the retinal plane by means of a threshold filter.

A probabilistic approach is proposed here based on a statistical distribution of the reprojection errors. Assuming a pixel-wise probability density function of the reprojection errors, $p(\varepsilon)$, is available, the above reliability measure can be accordingly defined using a corresponding cumulative distribution function of $p(\varepsilon)$ and a user-defined threshold, $\varepsilon_{th}$:

$$\rho(m) : \Pr(\varepsilon_\theta \leq \varepsilon_{th}) = \int_{-\infty}^{\varepsilon_{th}} p(\varepsilon)\, d\varepsilon, \qquad (3)$$

which represents the probability of an error associated to a given pixel exceeding the user-defined threshold ($\varepsilon_{th}$). The retinal plane can be further segmented by defining a reliability mask:

$$\Lambda = \{m_i \in \Omega | \rho(m_i) > P_{th}\}, \qquad (4)$$

which represents an area of the retinal plane where the reliability measure exceeds a given threshold ($P_{th}$). The thresholds can be arbitrarily given by a user depending on different demands.

In this embodiment, since only the spatial variance of the reprojection error ($\varepsilon_\theta$) is used with the pixel reprojection error ($\varepsilon_p$) discarded, a statistical independency between the scene depth and the reliability measure is assumed. However, a reliability measure including the pixel reprojection errors can of course be analogously generated and extracted from the statistical distribution of the image reprojection errors using a similar approach.

The abovementioned probability density function $p(\varepsilon_\theta)$ is defined and modeled here as a spatially varied Gaussian Mixture Model (GMM). In order to fit the pixel-wise map of GMMs, the image plane is divided into overlapping square blocks and is regularly tiled with a step $s = (1-\alpha)w_b$, where $w_b$ is the linear dimension of each block and $\alpha \in [0,1]$ is the overlapping ratio. For each block a Gaussian Model (GM) is estimated as:

$$p_b(\varepsilon) = \frac{2}{\sqrt{\pi}} e^{-\frac{(\varepsilon - \mu_b)^2}{2\sigma_b^2}},$$

where the Gaussian parameters ($\mu_b, \sigma_b$) are given by the mean and the standard deviations of the reprojection error data falling inside the block. For each pixel a GMM model is fitted using the GMs of a subset $B_i$ of blocks containing the pixel itself:

$$p_i(\varepsilon) = \sum_{b \in B_i} \alpha_{bi} p_b(\varepsilon).$$

The weight parameter $\alpha_{bi}$ defining the GMM is computed as the Euclidean distance from the reference pixel and the block centers, and is normalized in order to enforce the 1-integrability of the corresponding probability density function.

In summary, for this exemplary embodiment, a reliability map and a reliability mask are generated using the above defined equations (3) and (4) and the corresponding step $s = (1 - \alpha)w_b$. In other words, the comprehensive input required for the generation of the reliability measure and thus the reliability map and the mask includes:

- a sample of triplets ($u_i$, $v_i$, $\varepsilon_{\theta i}$) containing pixel coordinates and an angular reprojection error;
- the pixel resolution of the camera to be calibrated;
- the linear dimension of tiling blocks ($w_b$);
- the block overlapping rate ($\alpha$);
- the error threshold ($\varepsilon_{th}$) used to define the reliability measure (equation (3)) and related to the angular accuracy required by the end user for the specific application, which can be set between 0.1 degrees and 1 degree for most computer vision applications; and
- the mask threshold ($P_{th}$) used to define the reliability mask (equation (4)) and allows for the extraction of the reliability mask, which can be set within a normalized range [0,1] as the reliability measure can also be considered a probability measure. A normal value of $P_{th}$ is between 0.9 and 0.99.

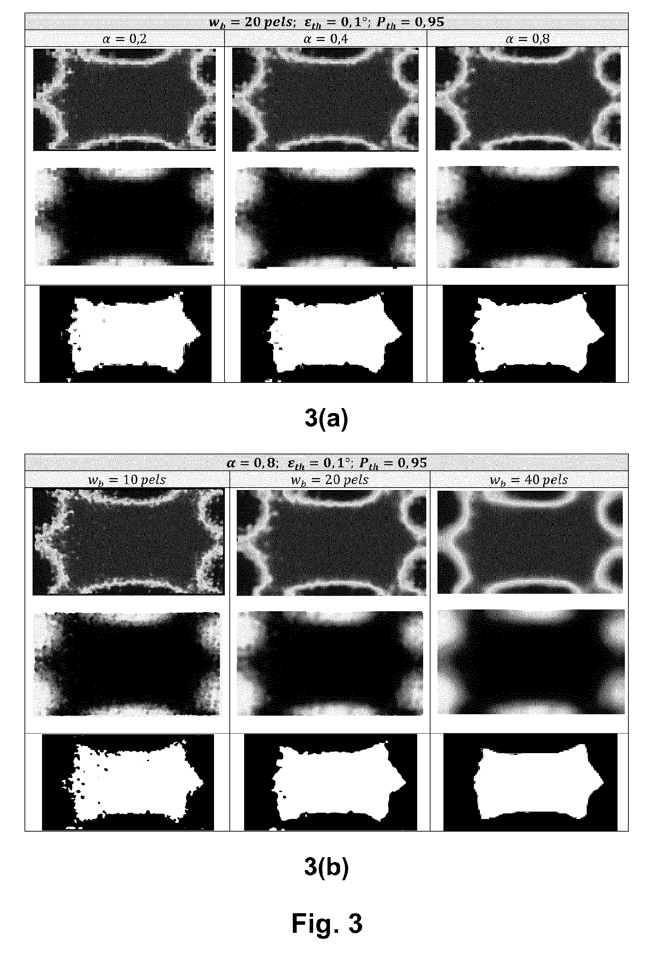

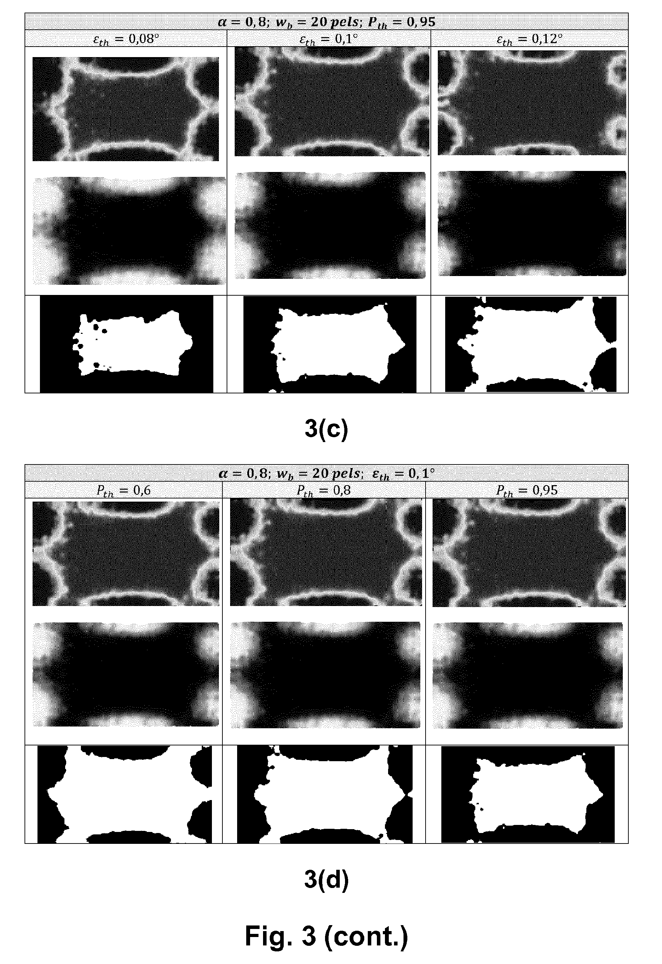

Fig. 3 shows implementation examples for the above exemplary embodiment, where a Panasonic HDC-Z10000 camcorder is used and a dataset of 431,813 pixel data is collected. The detailed parameters for the examples are shown in Table 1.

Table 1

| Camcorder | Panasonic HDC-Z10000 |
|---|---|
| Resolution | 1920×1080 |
| Number of points | 431813 |
| Block Size | 10×10 pels |
| Image coverage | ~20.8 points per block |
| Mean error (radians) | 9, 72e$^{-4}$ |
| Error range (radians) | [6,3e$^{-7}$, 4,3e$^{-3}$] |

Reliability map derived from equation (3) and reliability binary mask derived from equation (4) are generated for evaluation and review of the calibration result. For the colorimetric reliability maps (the upper images of each examples in Fig. 3), the color red indicates a high reliability measure while the blue indicates a low reliability measure. Accordingly, in the grayscale reliability maps (the middle images), the blacker area is with a higher reliability measure while the whiter area is with a lower reliability measure. It can be seen that the centered areas of the retinal planes are mostly with higher reliability measures and the reliability measures of the periphery areas are much lower. In the reliability masks (the lower pictures in Fig. 3), the color white indicates the pixels meeting the constraint as in equation (4).

Figs. 3(a)-3(d) respectively show the impacts of different parameters, i.e. the overlapping rate ($\alpha$), the block size ($w_b$), the error threshold ($\varepsilon_{th}$) and the mask threshold ($P_{th}$), on the reliability map and the reliability binary mask. It can be seen that a high overlapping rate tends to reduce the blockiness artifacts of the reliability map (Fig. 3(a)), and a greater block size tends to smooth the map and reduce the appearance of isolated blobs (Fig. 3(b)). In addition, a higher error threshold tends to expand the reliable area (Fig. 3(c)), while a higher mask threshold tends to shrink the reliable area (Fig. 3(d)).

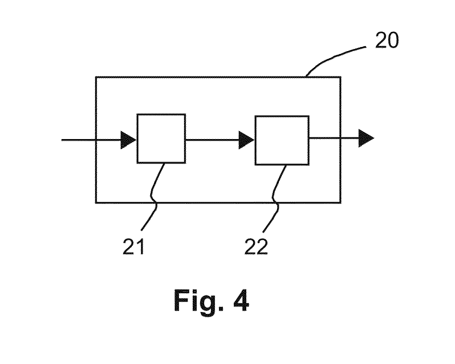

Fig. 4 schematically shows one embodiment of the camera calibration apparatus 20 configured to perform the method according to this invention. The apparatus uses an image dataset in which a calibration object is captured by a camera and comprises an acquiring unit 21 and an operation unit 22. The acquiring unit 21 is configured to acquire 2D and 3D correspondences from the image dataset and reprojection errors of the 2D and 3D correspondences. The operation unit 22 is configured to generate a reliability map of the retinal plane of the camera using the acquired reprojection errors. Preferably, the operation unit 22 is further configured to statistically analyze the reprojection errors.

**REFERENCES**

[I] D. Liebowitz, "Camera Calibration and Reconstruction of Geometry from Images," D.Phil. thesis, University of Oxford, 2001

[II] E. Hemayed, "A survey of camera self-calibration," Proceedings of IEEE Conference on Advanced Video and Signal Based Surveillance, pp.351-357, 2003

[III] R. Hartley and A. Zisserman, Multiple View Geometry in Computer Vision (2 ed.). Cambridge University Press, New York, NY, USA, 2003

[IV] R.Y. Tsai, "An Efficient and Accurate Camera Calibration Technique for 3D Machine Vision," Proceedings of IEEE Conference on Computer Vision and Pattern Recognition, pp. 364-374, 1986

[V] J. Salvi, X. Armangué and J. Batlle, "A comparative review of camera calibration methods with accuracy evaluation," Pattern Recognition, Vol. 35, Issue 7, pp. 1617-1635, 2002

[VI] Z. Zhang, "A flexible new technique for camera calibration." IEEE Transactions on Pattern Analysis and Machine Intelligence, 22(11):1330-1334, 2000

[VII] P. Gargallo, E. Prados, and P. Sturm, "Minimizing the reprojection error in surface reconstruction from images," IEEE ICCV, pp. 1-8, Rio de Janeiro, Brazil, 2007

[VIII] A. Delaunoy, et al., "Minimizing the Multi-view stereo reprojection error for triangular surface meshes," BMVC, pp. 1-10, 2008

[IX] J. Shi and C. Tomasi, "Good features to track," Proceedings of IEEE Computer Society Conference on Computer Vision and Pattern Recognition, pp. 593-600, 1994

[X] GoPro Official Website: http://gopro.com

**Claims**

1. A method of calibration for a camera, using an image dataset in which a calibration object is captured by the camera, the method comprising:

    - acquiring 2D and 3D correspondences from the image dataset;
    - acquiring reprojection errors of the 2D and 3D correspondences; and
    - generating a reliability map of a retinal plane of the camera using the acquired reprojection errors.

2. The method of claim 1, wherein generating the reliability map includes statistically analyzing the reprojection errors.

3. The method of claim 1, wherein the reliability map is a pixel-wise reliability map indicating a reliability measure of the geometrical information carried by each pixel of the retinal plane of the calibrated camera.

4. The method of claim 3, wherein the reliability measure is defined as a distribution function extracted from the probability density function of the reprojection error, the probability density function being defined as a spatially varied Gaussian Mixture Model.

5. The method of claim 3 or 4, wherein generating the reliability map includes defining a threshold for the reliability measure and generating the reliability map with regard to the threshold.

6. The method of claim 1, wherein the image dataset is extracted from a video sequence in which the calibration object is captured.

7. A camera calibration apparatus (20), using an image dataset in which a calibration object is captured by a camera, the apparatus comprising:

   - an acquiring unit (21) configured to acquire 2D and 3D correspondences from the image dataset, and to acquire reprojection errors of the 2D and 3D correspondences; and
   - an operation unit (22) configured to generate a reliability map of a retinal plane of the camera using the acquired reprojection errors.

8. The apparatus of claim 7, wherein the operation unit (22) is configured to statistically analyze the reprojection errors.

9. The apparatus of claim 7, wherein the reliability map is a pixel-wise reliability map indicating a reliability measure of the geometrical information carried by each pixel of the retinal plane of the calibrated camera, and the operation unit (22) defines a threshold for the reliability measure and generates the reliability map with regard to the threshold.

10. The apparatus of claim 9, wherein the reliability measure is defined as a distribution function extracted from the probability density function of the reprojection error, the probability density function being defined as a spatially varied Gaussian Mixture Model.

11. A computer readable storage medium having stored therein instructions for camera calibration, which when executed by a computer, cause the computer to:

    - acquire 2D and 3D correspondences from an image dataset in which a calibrated object is captured by a camera;
    - acquire reprojection errors of the 2D and 3D correspondences; and
    - generate a reliability map of a retinal plane of the camera using the acquired reprojection errors.

Acquiring an image dataset
for camera calibration — 10

Acquiring a dataset of 2D
and 3D correspondences — 11

Acquiring reprojection errors — 12

Generating a reliability map
of the retinal plane of the
camera — 13

**Fig. 1**

Video
images

Checkerboard
detection

Checkerboard
projection

Pose
estimation

$Z^{-1}$

Pose
prediction

Error data collection

**Fig. 2**

$w_b = 20\,pels;\ \ \varepsilon_{th} = 0,1°;\ P_{th} = 0,95$

| $\alpha = 0,2$ | $\alpha = 0,4$ | $\alpha = 0,8$ |

3(a)

$\alpha = 0,8;\ \ \varepsilon_{th} = 0,1°;\ P_{th} = 0,95$

| $w_b = 10\,pels$ | $w_b = 20\,pels$ | $w_b = 40\,pels$ |

3(b)

## Fig. 3

$\alpha = 0,8;\ w_b = 20\ pels;\ P_{th} = 0,95$

| $\varepsilon_{th} = 0,08°$ | $\varepsilon_{th} = 0,1°$ | $\varepsilon_{th} = 0,12°$ |

3(c)

$\alpha = 0,8;\ w_b = 20\ pels;\ \varepsilon_{th} = 0,1°$

| $P_{th} = 0,6$ | $P_{th} = 0,8$ | $P_{th} = 0,95$ |

3(d)

Fig. 3 (cont.)

**Fig. 4**

Europäisches
Patentamt

European
Patent Office

Office européen
des brevets

## EUROPEAN SEARCH REPORT

Application Number

EP 14 30 6245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STEPHEN VIDAS ET AL: "A Mask-Based Approach for the Geometric Calibration of Thermal-Infrared Cameras", IEEE TRANSACTIONS ON INSTRUMENTATION AND MEASUREMENT, IEEE SERVICE CENTER, PISCATAWAY, NJ, US, vol. 61, no. 6, 1 June 2012 (2012-06-01), pages 1625-1635, XP011443433, ISSN: 0018-9456, DOI: 10.1109/TIM.2012.2182851 | 1-3,5-9, 11 | INV. G06T7/00 |
| A | * abstract * <br> * page 1626, column 1, paragraph 1 * <br> * page 1627, column 1, paragraph 1 * <br> * page 1628, column 1, paragraph 2 * <br> * page 1629, column 1, section E / equation (5) * <br> * page 1632, column 2, paragraph 2 * <br> * figure 9 * | 4,10 | |
| X | VASUDEVAN R ET AL: "High-Quality Visualization for Geographically Distributed 3-D Teleimmersive Applications", IEEE TRANSACTIONS ON MULTIMEDIA, IEEE SERVICE CENTER, PISCATAWAY, NJ, US, vol. 13, no. 3, 1 June 2011 (2011-06-01), pages 573-584, XP011479789, ISSN: 1520-9210, DOI: 10.1109/TMM.2011.2123871 | 1-3,5-9, 11 | TECHNICAL FIELDS SEARCHED (IPC) G06T |
| A | * abstract * <br> * page 575, column 2, paragraph 1 - paragraph 3 * <br> * page 576, column 1, paragraph 2 * <br> * page 580, column 1, paragraph 2 * <br> * figure 3 * | 4,10 | |

The present search report has been drawn up for all claims

| Place of search | Date of completion of the search | Examiner |
|---|---|---|
| Munich | 13 February 2015 | Turina, Andreas |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 14306127 A

**Non-patent literature cited in the description**

- Camera Calibration and Reconstruction of Geometry from Images. **D. LIEBOWITZ.** D.Phil. thesis. University of Oxford, 2001
- **E. HEMAYED.** A survey of camera self-calibration. *Proceedings of IEEE Conference on Advanced Video and Signal Based Surveillance,* 2003, 351-357
- **R. HARTLEY ; A. ZISSERMAN.** Multiple View Geometry in Computer Vision. Cambridge University Press, 2003
- **R.Y. TSAI.** An Efficient and Accurate Camera Calibration Technique for 3D Machine Vision. *Proceedings of IEEE Conference on Computer Vision and Pattern Recognition,* 1986, 364-374
- **J. SALVI ; X. ARMANGUÉ ; J. BATLLE.** A comparative review of camera calibration methods with accuracy evaluation. *Pattern Recognition,* 2002, vol. 35 (7), 1617-1635
- **Z. ZHANG.** A flexible new technique for camera calibration. *IEEE Transactions on Pattern Analysis and Machine Intelligence,* 2000, vol. 22 (11), 1330-1334
- **P. GARGALLO ; E. PRADOS ; P. STURM.** Minimizing the reprojection error in surface reconstruction from images. *IEEE ICCV,* 2007, 1-8
- **A. DELAUNOY et al.** Minimizing the Multi-view stereo reprojection error for triangular surface meshes. *BMVC,* 2008, 1-10
- **J. SHI ; C. TOMASI.** Good features to track. *Proceedings of IEEE Computer Society Conference on Computer Vision and Pattern Recognition,* 1994, 593-600